# EUROPÄISCHE PATENTSCHRIFT

(11) **EP 0 656 464 B1**
(45) Veröffentlichungstag und Bekanntmachung des Hinweises auf die Patenterteilung: **31.03.1999**
(21) Anmeldenummer: 94117808.9
(22) Anmeldetag: 11.11.1994
(51) Int. Cl.: F01L 1/02, F01L 1/04

(54) **Brennkraftmaschine mit Nockenwellen-Kettentrieb-Kassetten**
Internal combustion engine comprising cartridge-type camshaft drive
Moteur à combustion interne muni d'une cassette contenant le dispositif d'entraînement de l'arbre à cames

(30) Priorität: 02.12.1993 DE 4341019
(43) Veröffentlichungstag der Anmeldung: 07.06.1995
(73) Patentinhaber: Ford-Werke Aktiengesellschaft, 50735 Köln (DE); FORD MOTOR COMPANY LIMITED, Brentwood, Essex CM13 3BW (GB); FORD FRANCE S. A., 92506 Rueil-Malmaison (FR)
(72) Erfinder: Metz, Hans, D-50529 Pulheim (DE); Meurer, Josef, D-53844 Troisdorf (DE); Weber, Gottfried, D-50672 Koeln (DE)
(74) Vertreter: Messulam, Alec Moses

(56) Entgegenhaltungen:
- EP-A- 0 188 951
- EP-A- 0 297 263
- FR-A- 2 644 514

## Beschreibung

Die Erfindung bezieht sich auf eine Brennkraftmaschine mit Nockenwellen-Kettentrieb-Kassetten, der im Oberbegriff des Patentanspruches 1 erläuterten Art.

Aus der DE-PS 39 16 512 ist eine Brennkraftmaschine mit Nockenwellen-Kettentrieb-Kassetten bekannt, bei der Kassettenbauteile, in der die Antriebs- und Abtriebsritzel mit aufgelegter Kette, eine Kettenführung und eine Kettenspannvorrichtung vormontierbar angeordnet sind, am Motorblock über Schraubenbolzen festlegbar sind.

Bei dieser bekannten Brennkraftmaschine mit Nockenwellen-Kettentrieb-Kassetten, werden diese Kassettenbauteile in, in die durch den Versatz der Zylinderreihen vorliegenden Endflächen des Motorblockes eingearbeitete, Ausschnitte eingefügt und verschraubt und dementsprechend muß für eine sichere Abdichtung der miteinander zusammenwirkenden Trennflächen der verbundenen Bauteile gesorgt werden.

Aus der EP-PS 0 124 433 ist eine Brennkraftmaschine mit Nockenwellen-Kettentrieb-Kassette bekannt, bei der ein zweiteiliger Steuergehäusekasten auf die Endfläche des Motorblockes axial aufgesetzt und befestigt wird. Auch hier sind wieder eine Anzahl von entsprechenden Abdichtungen erforderlich.

Aus der EP-PS 0 188 951 ist eine Brennkraftmaschine mit einer Nockenwellen-Kettentrieb-Montagekassette bekannt, bei der die Bauteile des Kettentriebes in einer Montagekassette aufgenommen werden, mittels der sie an die Endfläche des-Motorblockes axial angelegt werden und an dieser mittels Schraubenbolzen festgelegt werden, worauf die Montagekassette abgenommen wird. Auch hier ist nachfolgend dieser Montageoperation ein Abdecken des Kettentriebes mittels eines Gehäuses erforderlich an dem wieder Abdichtungen vorgesehen werden müssen.

Aus der JP-OS 59-15 612 ist eine Brennkraftmaschine mit Nockenwellen-Kettentrieben bekannt, bei der von einer in der Lage einer ursprünglichen zentralen Nockenwelle gelegenen Zwischenwelle die im Zylinderkopf einer V-Brennkraftmaschine angeordneten Nockenwellen über einmal vorn und einmal hinten am Motorblock im Versatz der Zylinderreihen angeordnete Kettentriebe angetrieben werden. Über die Art und Weise, wie diese Kettentriebe montiert, abgedeckt und abgedichtet werden, wird jedoch nichts mitgeteilt.

Die Aufgabe der Erfindung ist es, bei einer Brennkraftmaschine mit Nockenwellen-Kettentrieb-Kassetten und insbesondere einer V-Zylinderanordnung Maßnahmen vorzuschlagen, mit denen zum einen die Montage der Bauteile des Kettentriebes, wie Antriebs- und Abtriebsritzel und Kette, sowie Zusatzbauteile, wie Kettenführungen und Kettenspanner, vereinfacht werden und aufwendige Abdichtungen an schwierigen Trennflächen vermieden werden.

Gemäß der Erfindung wird diese Aufgabe gelöst, indem bei einer Brennkraftmaschine gemäß dem Oberbegriff des Patentanspruches 1, die im Kennzeichenteil des Anspruches 1 aufgezeigten Maßnahmen angewendet werden.

Dadurch, daß eine Kassetteneinheit mit den vormontierten Bauteilen des Kettentriebes von seitlich oben in radialer Richtung zur Antriebswelle hin in einen Kettenschacht im Motorblock, der im gegebenen Zylinderversatz angeordnet ist, einsetzbar ist, danach der Zylinderkopf mit ebenfalls einem Kettenschacht aufsetzbar ist und die Kassetteneinheit über zumindest zwei parallel zur Antriebswelle verlaufende Schraubenbolzen festlegbar ist und während des Betriebes der Brennkraftmaschine im Motorblock verbleibt, kann eine einfache Montage der Bauteile des Kettentriebes sichergestellt werden und können getrennte Gehäuse mit den erforderlichen Abdichtungen vermieden werden.

Die Kettenschächte im Zylinderblock und im Zylinderkopf können gegossen sein, gegossen und nachbearbeitet oder herausgearbeitet sein.

Dadurch, daß jede Kassetteneinheit aus einer Grundplatte mit unmittelbar darauf angeordneter Kettenführung, einer mit der Grundplatte über einen Drehpunkt verschwenkbaren Kettenspannschiene, sowie den vormontierten Antriebs- und Abtriebsritzeln und der aufgelegten Kette besteht, wobei diese über nach erfolgter Montage entfernbare Haltemittel vorübergehend festgelegt sind, wird eine Montagevorrichtung bereitgestellt, die im wesentlichen aus unmittelbar für die spätere Funktion des Kettentriebs erforderliche Bauteilen besteht, die während des Betriebes der Brennkraftmaschine in dieser verbleiben und dort die erforderlichen Funktionen erfüllen.

Das Abtriebsritzel kann vorzugsweise in der Kassetteneinheit enthalten sein, es kann aber auch nach erfolgter Zylinderkopfmontage in den Kettentrieb eingefügt werden.

In den Ansprüchen 2 bis 4 sind weitere zweckmäßige Ausgestaltungen der Erfindung näher erläutert.

Die Erfindung wird anhand eines in den beiliegenden Zeichnungen gezeigten Ausführungsbeispieles näher erläutert. Es zeigt:
- Fig. 1: eine durch einen in Strich-Punktlinien angedeuteten Motorblock und Zylinderkopf ermöglichte Seitenansicht der Kassetteneinheit gemäß der Erfindung;
- Fig. 2: einen vertikalen Schnitt entlang der Linie II-II in Fig. 1;
- Fig. 3: eine durch einen in Strich-Punktlinien angedeuteten Motorblock und Zylinderkopf ermöglichte Seitenansicht der Kassetteneinheit am anderen Ende der V-Brennkraftmaschine;
- Fig. 4: einen vertikalen Schnitt entlang der Linie IV-IV in Fig. 3;

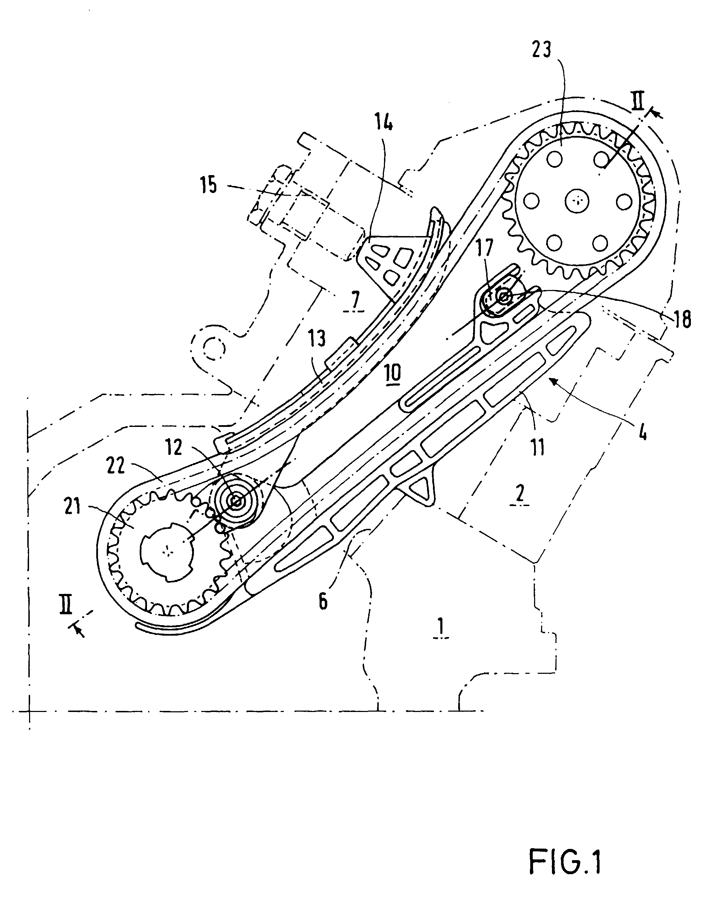

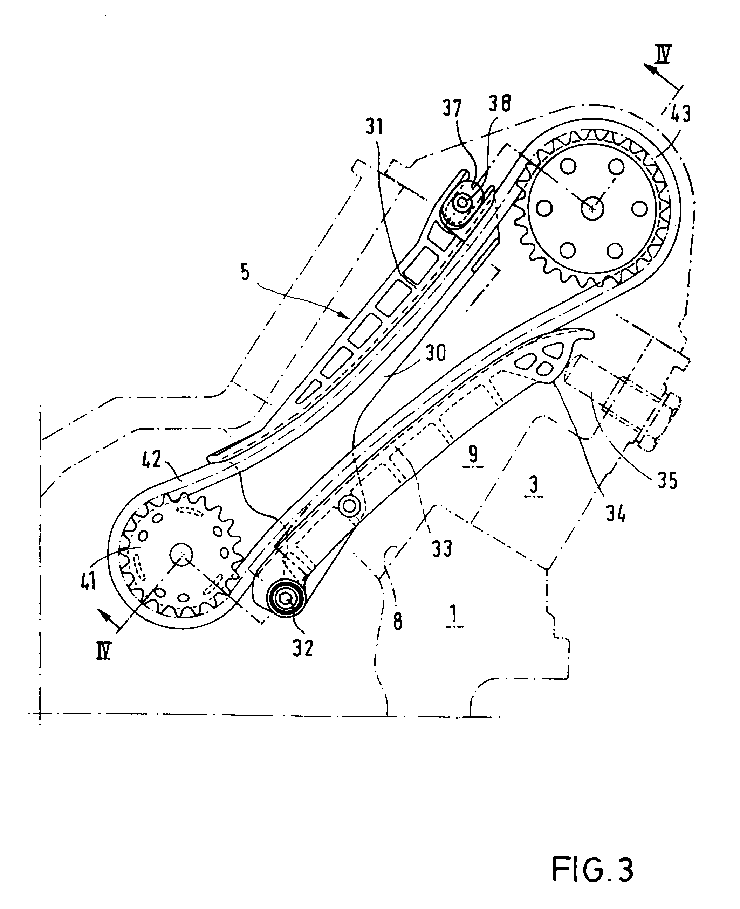

In den Figuren 1 und 3 sind die entsprechenden Bereiche eines Motorblockes 1 und jeweils eines rechten und linken Zylinderkopfes 2 und 3 angedeutet. In den Figuren 1 und 3 ist sowohl der Zylinderblock 1 als auch die Zylinderköpfe 2 und 3 nur in Strich-Punkt-Linien dargestellt, so daß jeweils eine Seitenansicht der erfindungsgemäßen Kassetteneinheiten 4 und 5 ermöglicht wird.

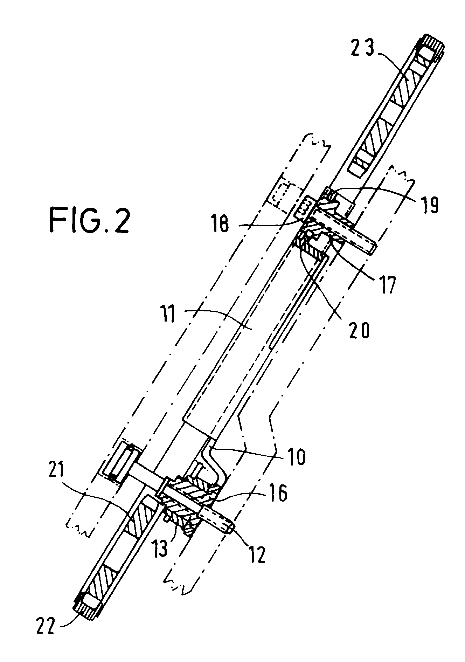

Zunächst wird die in den Figuren 1 und 2 gezeigte Kassetteneinheit 4 beschrieben, die eine Verbindung zwischen der Zwischenwelle und einer im rechten Zylinderkopf angeordneten Nockenwelle herstellt.

Die Kassetteneinheit 4 erstreckt sich hierbei in einem im Zylinderblock 1 ausgebildeten unteren Kettenschacht 6 und einen im Zylinderkopf 2 ausgebildeten oberen Kettenschacht 7. Die Kettenschächte 6 und 7 können nur durch entsprechende, gegossene Schächte gebildet sein, die ggf. nachbearbeitet sind oder die Schächte werden erst nachträglich eingearbeitet.

In ähnlicher Weise ist die Kassetteneinheit 5 in einem im Zylinderblock 1 ausgebildeten unteren Kettenschacht 8 und einem im Zylinderkopf 3 ausgebildeten oberen Kettenschacht 9 angeordnet.

Die Kassetteneinheit 4 besteht im wesentlichen aus einer Grundplatte 10 mit darauf unmittelbar angeordneter Kettenführung 11 und einer mit der Grundplatte 10 über einen Drehpunkt/Schraubenbolzen 12 schwenkbar verbundenen Kettenspannschiene 13, die über einen Ansatz 14 von einem im Zylinderkopf 2 eingesetzten hydraulichen Kettenspanner 15 beaufschlagt wird.

Die Grundplatte 10 ist im Bereich des Drehpunktes/Schraubenbolzen 12 mit einer Metallhülse 16 versehen, die die Drehachse für die schwenkbare Kettenspannschiene 13 bildet und die mittels des Schraubenbolzens 12 in der entsprechenden Position am Motorblock festgelegt wird. Der Schraubenbolzen 12 kann hierbei ggf. durch eine Bohrung in der Wandung des Kettenschachtes 6 festgezogen werden und dichtet diese Bohrung mit einer an seinem Kopfende angeordnete O-Ring Dichtung ab.

An der Grundplatte 10 ist im Bereich des Zylinderkopfes 2 eine Befestigungsbuchse 17 mit einer Nut-Feder-Verbindung 19/20 angeordnet, die über einen Schraubenbolzen 18 am Zylinderkopf 2 festgelegt wird und die einen Ausgleich der Längen-Toleranzen ermöglicht. Der Schraubenbolzen 18 kann wieder durch eine Bohrung in der Seitenwand des Kettenschachtes festgezogen werden, die danach mit einem Blechstopfen verschlossen wird.

An der Kassetteneinheit 4 wird unten das Antriebsritzel 21 an der Antriebswelle angeordnet und wird durch die durch die Kettenführung 11 und die Kettenspannschiene 13 fixierte Kette 22 gehalten. In gleicher Weise wird oben das Abtriebsritzel 23 gehalten.

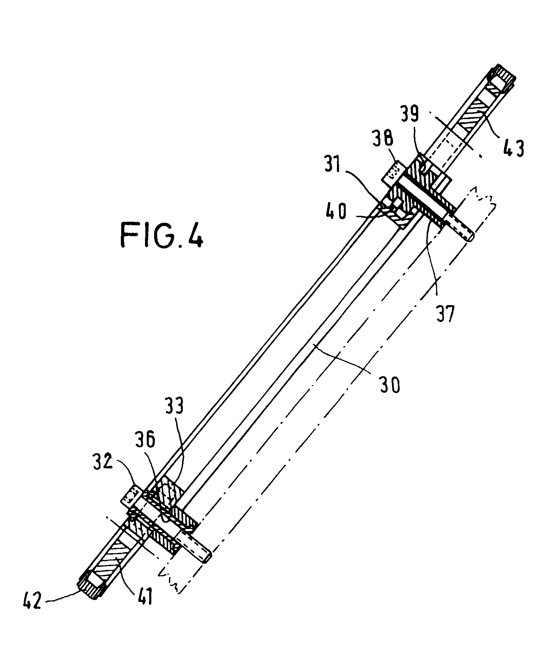

Nunmehr wird die in den Figuren 3 und 4 gezeigte Kassetteneinheit 5 beschrieben, die die Zwischenwelle mit der oben liegenden Nockenwelle der linken Zylinderreihe einer V-Brennkraftmaschine verbindet.

Die Kassetteneinheit 5 besteht wieder aus einer Grundplatte 30, an der unmittelbar eine Kettenführung 31 angeordnet ist. An der Grundplatte 30 ist über einen Schwenkpunkt, Schraubenbolzen 32 eine Kettenspannschiene 33 schwenkbar angeordnet, an deren einen Ende 34 ein im Zylinderkopf 3 angeordneter Kettenspanner 35 angreift.

Die Grundplatte 30 ist wieder mit einer metallischen Buchse 36 versehen, die den Schwenkpunkt für die Spannschiene 33 bildet und über die die Befestigung mittels eines Schraubenbolzens 32 am Motorblock 1 erfolgen kann. Der Schraubenbolzen 32 braucht hierbei nicht durch eine Wandung des Kettenschachtes geführt und abgedichtet zu werden, da hier die Anordnung durch den Motor-Stirndeckel abgedeckt wird.

Am oberen Ende der Grundplatte 30 ist wieder eine Befestigungsbuchse 37 angeordnet, die mit der Grundplatte 30 über eine Nut/Feder-Verbindung 39/40 zusammenwirkt und über einen Schraubenbolzens 38 festgelegt wird, um Längentoleranzen, die sich aus dem Zusammenbau von Zylinderblock und Zylinderkopf ergeben, auszugleichen.

Am unteren Ende der Kassetteneinheit 5 ist das Antriebsritzel 41 angeordnet, das für die Verbindung mit der Antriebswelle vorbereitet ist und dieses Antriebsritzel 41 wird durch die in die Kettenführung 31 und an die Spannschiene 33 eingelegte Kette 42 gehalten.

Das Abtriebsritzel 43 wird vorzugsweise auch von der Kette 42 vormontiert gehalten.

Die Kassetteneinheiten 4 und 5 haben in den Kettenschächten im Zylinderblock und im Zylinderkopf so viel axialen Spielraum, daß die An- und Abtriebsritzel axial auf ihre entsprechenden Wellenenden aufgesetzt, zentriert und verschraubt werden können. Die zu diesem Zeitpunkt noch nicht straff gespannte Kette ermöglicht diese axialen Aufsetzbewegungen.

Durch die erfindungsgemäßen Kassetteneinheiten 4 und 5, die im Gegensatz zum Stand der Technik, wo Kassetteneinheiten in axialer Richtung an den Motorblock und die Zylinderköpfe angefügt werden, nunmehr in radialer Richtung zur Antriebswelle in entsprechende Kettenschächte im Motorblock und in den Zylinderköpfen eingeschoben werden, können Kassettengehäuse mit ihren erforderlichen zusätzlichen Abdichtungsmaßnahmen vermieden werden und darüber hinaus bleiben die für die Montage erforderlichen Haltevorrichtungen während des Betriebes der Brennkraftmaschine im Motor und stellen dort die ohnehin erforderlichen Funktionen von Kettenführungen und Kettenspannschienen zur Verfügung.

Die beschriebenen Grundplatten der Kassetteneinheiten 4 und 5 können aus entsprechend gestanzten und geprägten Blechteilen bestehen, auf denen die Kettenführungen durch Einklipsen oder Anspritzen befestigt sind.

Bei der entsprechenden Wahl von Kunststoffmaterialien ist es jedoch auch möglich, alle Bauteile der Kassetteneinheiten 4 und 5 aus hochwertigen Kunststoffmaterialien herzustellen, so daß ein normalerweise die Fertigung kostenmäßig verteuernder Verbund zwischen Metall und Kunststoff nicht vorgesehen werden muß.

## Patentansprüche

1. Brennkraftmaschine mit zumindest einer oben liegenden Nockenwelle und Nockenwellen-Kettentrieb-Kassetten, mit zumindest einer Kassetteneinheit (4 bzw. 5), in der die Antriebs- und Abtriebsritzel (21 und 23 bzw. 42 und 43) mit aufgelegter Kette (22 bzw. 42), eine Kettenführung (11 bzw. 31) und ein Teil einer Kettenspanneinrichtung (13 bzw. 33) vormontierbar angeordnet sind und die Antriebs- und Abtriebsritzel (21 und 23 bzw. 42 und 43) mit ihren Wellen drehfest verbindbar und die Teile der Kassetteneinheiten (4 bzw. 5) am Motorblock (1) und am Zylinderkopf (2 bzw. 3) über zumindest zwei Schraubenbolzen festlegbar sind,
**dadurch gekennzeichnet**, daß
- die zumindest eine Kassetteneinheit (4 bzw. 5) mit den vormontierten Bauteilen des Kettentriebes von seitlich oben, in radialer Richtung zur Antriebswelle hin in einem Kettenschacht (6 bzw. 8) im Motorblock (1) einsetzbar und in einem Kettenschacht (7 bzw. 9) im Zylinderkopf (2 bzw. 3) aufgenommen ist und das Antriebs- und Abtriebsritzel (21 und 23 bzw. 42 und 43) mit ihren Wellen durch axiales Aufsetzen mit diesen zentriert und verschraubbar sind.

2. Brennkraftmaschine nach Anspruch 1,
**dadurch gekennzeichnet**, daß
- jede Kassetteneinheit (4 bzw. 5) aus einer Grundplatte (10 bzw. 30) mit unmittelbar angeordneter Kettenführung (11 bzw. 31),
- einer mit der Grundplatte (11 bzw. 31) über einen Drehpunkt/Schraubenbolzen (12 bzw. 32) verschwenkbar verbundenen Kettenspannschiene (13 bzw. 33) sowie
- den vormontierten Antriebs- und Abtriebsritzeln (21 und 23 bzw. 41 und 43) und der aufgelegten Kette (22 bzw. 42) bestehen, wobei die letzteren über die durch die Kettenführung (11) und die Kettenspannschiene (13) fixierte Kette (22) mit axialer Freiheit gehalten sind.

3. Brennkraftmaschine nach den Ansprüchen 1 und 2,
**dadurch gekennzeichnet**, daß
- die Grundplatte (10 bzw. 30) der Kassetteneinheiten (4 bzw. 5) aus einer Metallplatte oder einer Kunststoffplatte bestehen, an die die Kettenführungen (11 bzw. 31) aus einem Kunststoffmaterial angespritzt, eingeclipst oder befestigt oder einstückig ausgebildet sind,
- die Kettenspannschiene (13 bzw. 33) aus Kunststoff bestehen und an einer in der Grundplatte (10 bzw. 30) eingesetzten Metallbuchse (16 bzw. 36) schwenkbar angeordnet sind, wobei
- die Metallbuchse (16 bzw. 36) gleichzeitig zur Befestigung der Kassetteneinheiten mittels eines Schraubenbolzens (12 bzw. 32) am Motorblock (1) dient und
- am oberen Teil der Grundplatte (10 bzw. 30) eine Befestigungsbuchse (17 bzw. 37) angeordnet ist, die über eine Nut/Feder-Verbindung (19/20 bzw. 39/40) einen Längenausgleich ermöglichend zur Befestigung über Schraubenbolzen (18 bzw. 38) am Zylinderkopf (2 bzw. 3) vorgesehen ist.

4. Brennkraftmaschine nach den Ansprüchen 2, 3,
**dadurch gekennzeichnet**, daß
- die Schraubenbolzen (12 und 18) durch Bohrungen in einer Wandung der Kettenschächte (8 und 9) festgezogen werden können und die Bohrungen durch eine O-Ring Dichtung am Kopfende des Schraubenbolzens (12) oder durch einen eingepreßten Blech- oder Kunststoff-Stopfen verschlossen werden.

## Claims

1. An internal combustion engine having at least one overhead camshaft and camshaft chain drive cassettes, comprising at least one cassette unit (4 or 5) in which the drive and driven sprockets (21 and 23 or 42 and 43) with the chain (22 or 42) placed thereon, a chain guide (11 or 32) and a part of a chain tensioning device (13 or 33) are arranged so that they can be preassembled, the drive and driven sprockets (21 and 23 or 42 and 43) being non-rotatably connectable to their shafts and the parts of the cassette units (4 or 5) being fixable to the engine block (1) and to the cylinder head (2 or 3) by means of at least two screw bolts,
characterised in that
- the at least one cassette unit (4 or 5) with the preassembled components of the chain drive can be inserted sideways from above, in a direction radial to the drive shaft, into a chain chamber (6 or 8) in the engine block (1) and is accommodated in a chain chamber (7 or 9) in the cylinder head (2 or 3) and the drive and driven sprockets (21 and 23 or 42 and 43) can be placed on their shafts axially and centred and screwed thereon.

2. An internal combustion engine according to claim 1,
characterised in that
- each cassette unit (4 or 5) comprises:
- a base plate (10 or 30) with a chain guide (11 or 31) fitted directly thereon;
- a chain tensioning rail (13 or 33) connected to the base plate (11 or 31) by means of a pivot/screw bolt (12 or 32)so as to swivel thereon; and
- the preassembled drive and driven sprockets (21 and 23 or 41 and 43) and the chain (22 or 42) placed thereon, the latter being held with axial play by means of the chain (22) fixed by the chain guide (11) and the chain tensioning rail (13).

3. An internal combustion engine according to claim 1 or claim 2,
characterised in that
- the base plate (10 or 30) of the cassette units (4 or 5) comprises a metal plate or a plastics plate, on to which the chain guides (11 or 31) of a plastics material are injection moulded, clipped or fastened or with which they are formed integrally,
- the chain tensioning rails (13 or 33) consist of plastics material and are arranged to swivel about a metal bushing (16 or 36) inserted in the base plate (10 or 30),
- the metal bushing (16 or 36) serves at the same time to fasten the cassette units to the engine block (1) by means of a screw bolt (12 or 32) and
- a securing bushing (17 or 37) is fitted in the upper part of the base plate (10 or 30), said bushing being provided for securing the cassette units to the cylinder head (2 or 3) by means of screw bolts (18 or 38) by means of a tongue and groove joint (19/20 or 39/40) providing for length compensation.

4. An internal combustion engine according to claim 2 or claim 3,
characterised in that
- the screw bolts (12 and 18) can be tightened through bores in a wall of the chain chambers (8 and 9) and the bores closed by an O-ring seal at the head end of the screw bolt (12) or by a pressed-in stopper of sheet metal or plastics material.

## Revendications

1. Moteur à combustion interne muni d'au moins un arbre à cames en tête et de cassettes de distribution par chaîne, avec au moins un ensemble de cassette (4 ou 5) dans lequel sont disposés, avec possibilité de pré-assemblage, les pignons d'entraînement et de sortie (21 et 23 ou 41 et 43) sur lesquels est montée la chaîne (22 ou 42), un guide de chaîne (11 ou 31) et un élément d'un tendeur de chaîne (13 ou 33), les pignons d'entraînement et de sortie (21 et 23 ou 41 et 43) pouvant être assemblés en solidarité de rotation à leurs arbres et les éléments des ensembles de cassette (4 ou 5) pouvant être fixés en position sur le bloc moteur (1) et sur la culasse (2 ou 3) à l'aide d'au moins deux boulons filetés,
**caractérisé** en ce que le ou chaque ensemble de cassette (4 ou 5) peut être inséré, avec les éléments préassemblés de la distribution par chaîne, par le côté et par le haut, en direction radiale vers l'arbre d'entraînement, dans un puits de chaîne (6 ou 8) dans le bloc moteur (1), et reçu dans un puits de chaîne (7 ou 9) dans la culasse (2 ou 3), et les pignons d'entraînement et de sortie (21 et 23 ou 41 et 43) peuvent être centrés et vissés avec leurs arbres en les posant axialement.

2. Moteur à combustion interne selon la revendication 1, **caractérisé** en ce que chaque ensemble de cassette (4 ou 5) est constitué
- d'une plaque de base (10 ou 30) sur laquelle est directement disposé le guide de chaîne (11 ou 31),
- d'un rail tendeur de chaîne (13 ou 33) assemblé à pivotement à la plaque de base (10 ou 30) au moyen d'un pivot/boulon fileté (12 ou 32),
- ainsi que des pignons préassemblés d'entraînement et de sortie (21 et 23 ou 41 et 43) et de la chaîne montée (22 ou 42), ces derniers étant maintenus en liberté axiale au moyen de la chaîne (22) fixée en position par le guide de chaîne (11) et le tendeur de chaîne (13).

3. Moteur à combustion interne selon les revendications 1 et 2, **caractérisé** en ce que
- la plaque de base (10 ou 30) des ensembles de cassette (4 ou 5) consiste en une plaque en métal ou en matière plastique, sur laquelle les guides de chaîne (11 ou 31) sont moulés par injection de matière plastique, clipsés, fixés ou réalisés d'un seul tenant,
- les rails tendeurs de chaîne (13 ou 33) sont réalisés en matière plastique et sont disposés à pivotement sur une douille métallique (16 ou 36) insérée dans la plaque de base (10 ou 30),
- la douille métallique (16 ou 36) servant en même temps à fixer les ensembles de cassette sur le bloc moteur (1) au moyen d'un boulon fileté (12 ou 32),
- et une douille de fixation (17 ou 37) est fixée sur la partie supérieure de la plaque de base (10 ou 30), douille qui, à l'aide d'un assemblage à rainure et languette (19/20 ou 39/40) permettant une compensation de longueur, est prévue pour la fixation sur la culasse (2 ou 3) au moyen de boulons filetés (18 ou 38).

4. Moteur à combustion interne selon les revendications 2 et 3, **caractérisé** en ce que les boulons filetés (12 et 18) peuvent être serrés à bloc par des perçages prévus dans une paroi des puits de chaîne (8 et 9), et les perçages peuvent être fermés par un joint torique d'étanchéité à l'extrémité de tête du boulon fileté (12), ou par un bouchon emmanché en tôle ou en matière plastique.
